(19) Europäisches Patentamt
European Patent Office
Office européen des brevets

(11) **EP 2 895 959 B1**

(12) **FASCICULE DE BREVET EUROPEEN**

(45) Date de publication et mention de la délivrance du brevet:
**14.12.2016 Bulletin 2016/50**

(21) Numéro de dépôt: **13814974.5**

(22) Date de dépôt: **23.12.2013**

(51) Int Cl.:
**G06F 12/02** *(2006.01)*     **G06F 12/14** *(2006.01)*

(86) Numéro de dépôt international:
**PCT/EP2013/077934**

(87) Numéro de publication internationale:
**WO 2014/106605 (10.07.2014 Gazette 2014/28)**

(54) **PROCÉDÉ D'ACCÈS À L'ENSEMBLE DES CELLULES D'UNE ZONE MÉMOIRE À DES FINS D'ÉCRITURE OU DE LECTURE DE BLOCS DE DONNÉES DANS LESDITES CELLULES**

VERFAHREN ZUM ZUGRIFF AUF DIE ANORDNUNG DER ZELLEN EINES SPEICHERBEREICHS FÜR SCHREIBEN ODER LESEN VON DATENBLÖCKEN IN DIESEN ZELLEN

METHOD OF ACCESS TO THE ASSEMBLY OF THE CELLS OF A MEMORY AREA FOR THE PURPOSES OF WRITING OR READING BLOCKS OF DATA IN SAID CELLS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **07.01.2013 FR 1350108**

(43) Date de publication de la demande:
**22.07.2015 Bulletin 2015/30**

(73) Titulaire: **Morpho**
**92130 Issy-les-Moulineaux (FR)**

(72) Inventeurs:
• **SERE, Ahmadou**
**F-92130 Issy Les Moulineaux (FR)**
• **BOULET, Frédéric**
**F-92130 Issy Les Moulineaux (FR)**

(74) Mandataire: **Le Guen-Maillet**
**5, place de Newquay**
**BP 70250**
**35802 Dinard Cedex (FR)**

(56) Documents cités:
**US-A1- 2009 125 686**

**Description**

La présente invention concerne un procédé d'accès à l'ensemble des cellules d'une zone mémoire à des fins d'écriture ou de lecture de blocs de données dans lesdites cellules. La présente invention trouve un intérêt particulier, par exemple, dans tout type de cartes, carte à puce, carte SIM, etc. qui comprennent une unité de traitement, telle qu'un microcontrôleur, pour manipuler des données cryptographiques servant à l'identification et/ou l'authentification d'un utilisateur d'une telle carte.

De manière générale, un procédé d'accès aux cellules d'une zone mémoire est utilisé à chaque fois qu'une unité de traitement effectue une opération d'écriture ou de lecture de blocs de données dans les cellules de ladite zone mémoire. Cette opération d'accès consiste, pour l'unité de traitement, à chaque temps d'accès, à générer une adresse qui est alors fournie sur le bus d'adressage d'une mémoire et, soit à lire le bloc de données stocké dans la cellule à l'adresse ainsi générée, soit à écrire un bloc de données dans ladite cellule. Les blocs de données lus dans les cellules de la zone mémoire peuvent être manipulés, c'est-à-dire traités, recopiés après traitement, etc. par l'unité de traitement ou être transmis après traitement à une unité de traitement extérieure. De même, les blocs de données qui sont stockés dans les cellules de ladite zone mémoire peuvent être des blocs de données qui ont fait l'objet de manipulations de la part de ladite unité de traitement, ou des blocs de données qui ont été reçus d'une unité de traitement extérieure.

Les manipulations de blocs de données, qui concernent des informations confidentielles, doivent être opérées par l'unité de traitement en toute sécurité. Or, il existe des techniques d'analyse, dites d'analyse des canaux cachés, comme par exemple l'analyse de la consommation électrique ou de l'émission de radiations électromagnétiques, effectuées lors d'opérations spécifiques qui peuvent permettre de connaître ces informations confidentielles, si des précautions ne sont pas prises. Des contre-mesures sont généralement donc prises.

Parmi celles-ci, des techniques consistent à intégrer une composante aléatoire dans l'accès à la zone mémoire qui contient les blocs de données correspondant à ces informations confidentielles, différente à chaque fois qu'un accès est réalisé afin qu'une analyse par canaux cachés ne puisse pas permettre de remonter à l'information confidentielle.

Bien que le domaine d'application qui est décrit dans ce document ne soit pas celui de l'invention, le document US2009/0125686 décrit une méthode dans laquelle cette composante aléatoire est mise en oeuvre par le choix pseudo-aléatoire d'un algorithme de changement d'adresses d'images de mémoire parmi plusieurs algorithmes indexé par un compte d'accès.

Une technique consiste à choisir un indice aléatoire préalablement à l'opération d'accès à la zone mémoire, puis à accéder aux cellules de la zone mémoire considérée de manière que les adresses d'accès soient dans un ordre décalé de cet indice aléatoire par rapport à l'ordre des temps d'accès. Ainsi, à chaque manipulation des blocs de données de la zone mémoire considérée, la combinaison des adresses d'accès est dans un ordre différent de celle d'une manipulation précédente, ordre simplement décalé de l'indice aléatoire. Cette technique peut s'avérer insuffisante à l'encontre d'attaques répétées et statistiques, car le nombre de combinaisons d'adresses d'accès possibles qui est égal à la taille maximale de la zone mémoire à accéder s'avère relativement restreint.

Une autre technique consiste à générer un indice par application d'un masque de brouillage, par exemple pour l'utilisation d'une méthode d'addition dans le corps de Gallois $GF(2n)$ où les coefficients sont des éléments de $GF(2)$. Si cette technique s'avère plus efficace à l'encontre des attaques répétées et statistiques que la technique précédente, elles présentent néanmoins l'inconvénient que l'application directe d'un masque est dépendante de la taille de la zone mémoire à adresser, notamment si celle-ci n'est pas une puissance de 2. Pour remédier à cet inconvénient, il est nécessaire de découper la zone mémoire à accéder en sous-zones de tailles puissance de 2 et d'effectuer les accès sur chacune de ces sous-zones. Les sous-zones de plus petite taille ne sont cependant pas brouillées convenablement. Il en résulte que le nombre de combinaisons d'adresses d'accès possibles est encore trop faible et qu'il n'est pas possible de choisir le dernier indice pour une taille de la zone mémoire impaire.

Il s'avère donc que les techniques connues de l'état de la technique ne sont pas suffisamment résistantes à des attaques par analyse des canaux cachés du fait que le nombre possible de combinaisons des adresses d'accès dans des ordres différents n'est pas assez important et ne résistent donc pas à des attaques dans un temps relativement long.

Le but de l'invention est donc de remédier aux inconvénients mentionnés ci-dessus des techniques de l'état de la technique et de proposer un procédé d'accès à l'ensemble des cellules d'une zone mémoire à des fins d'écriture ou de lecture de blocs de données dans lesdites cellules dont le nombre possible de combinaisons des adresses d'accès est suffisamment élevé pour rendre inefficace l'analyse dans un temps raisonnable des informations obtenues par les techniques d'analyse des canaux cachés.

A cet effet, l'invention concerne un procédé d'accès à l'ensemble des cellules d'une zone mémoire à des fins d'écriture ou de lecture de blocs de données dans lesdites cellules, ledit procédé incluant, pour chacun des temps d'accès $T_i$ avec $i = 0$ à $N$ auxdites cellules de ladite zone mémoire à accéder, un processus de détermination de l'adresse $ADR_j$, avec $j = 0$ à $N$, de la cellule de la zone mémoire à accéder audit temps d'accès $T_i$, une adresse $ADR_j$ déterminée pour un temps d'accès $T_i$ n'étant pas de nouveau déterminée pour un autre temps d'accès $T_k$.

EP 2 895 959 B1

Selon l'invention, ledit processus de détermination de chaque adresse ADRj est un processus pseudo aléatoire.

Selon un mode de réalisation de l'invention, ledit processus de détermination d'adresse pseudo aléatoire comprend, mises en oeuvre pour chaque temps d'accès Ti :

- une étape de détermination aléatoire d'un bit d'aléa qui peut ainsi prendre soit une première valeur, soit une seconde valeur,
- une étape de test de la valeur prise par ledit bit d'aléa qui branche ledit processus,
- soit vers une étape de détermination d'un index comme étant égal à la valeur d'un premier indice, suivie d'une étape d'incrémentation d'une unité dudit premier indice,
- soit vers une étape de détermination dudit index comme étant égal à la valeur d'un second indice, suivie d'une étape de décrémentation d'une unité dudit second indice,

la valeur dudit index étant la valeur de ladite adresse de la cellule de la zone mémoire à accéder audit temps d'accès Ti.

Selon un premier mode de réalisation, ladite étape de détermination aléatoire consiste à choisir aléatoirement la valeur dudit bit d'aléa.

Selon un second mode de réalisation, ladite étape de détermination aléatoire consiste à extraire d'un registre le bit de poids correspondant au rang du temps d'accès considéré, ledit registre stockant un nombre préalablement déterminé de manière pseudo aléatoire.

Dans une application particulière, le nombre stocké dans ledit registre a été déterminé lors d'une précédente instance de mise en oeuvre du procédé d'accès selon l'invention par concaténation de tous les bits d'aléa de manière que le bit d'aléa déterminé lors de la précédente instance pour un temps d'accès de rang i soit stocké dans le bit dudit registre dont le poids est égal audit rang i.

Avantageusement, ladite zone mémoire étant de taille N+1, la valeur initiale du premier indice est comprise entre 0 et N et la valeur initiale du second indice est égale à la valeur initiale du premier indice à laquelle est ajoutée la taille de ladite zone mémoire moins un.

Par exemple, la valeur initiale du premier indice est déterminée de manière aléatoire ou pseudo aléaloire.

Selon une variante de réalisation, ledit procédé consiste, lors d'une étape d'initialisation, à déterminer la valeur d'un nombre aléatoire. Le processus de détermination d'adresse comprend en outre, après détermination de la valeur de l'index pour le temps d'accès Ti, une étape d'application à l'index ainsi déterminé d'une opération logique de OU Exclusif bit à bit avec ledit nombre aléatoire, la valeur résultant de ladite opération étant la valeur de l'adresse d'accès à la cellule de la zone mémoire à accéder audit temps d'accès Ti.

Selon une autre variante, ledit procédé d'accès consiste lors d'une étape d'initialisation, à déterminer la valeur d'un nombre aléatoire, et ledit processus pseudo aléatoire comprend en outre, après détermination de la valeur de l'index pour le temps d'accès Ti, une étape de calcul d'une valeur de masque, une étape d'application à ladite valeur dudit nombre aléatoire d'une opération logique ET bit à bit avec ledit masque, et une étape d'application à l'index déterminé pour le temps d'accès Ti considéré d'une opération logique de OU Exclusif bit à bit avec le résultat de ladite opération logique ET, la valeur résultant de l'opération de OU Exclusif étant la valeur de l'adresse d'accès à la cellule de la zone mémoire à accéder audit temps d'accès Ti.

Avantageusement, ladite étape de calcul d'une valeur de masque consiste à :

- positionner le bit de poids fort dudit masque à zéro, puis pour chaque bit de poids i prenant successivement les valeurs de S-1 à 1, S étant la taille en nombre de bits des variables utilisées pour les opérations logiques,
- à appliquer au bit de poids i de l'index déterminé une opération logique de OU Exclusif avec le bit de poids i de la taille de ladite zone mémoire,
- à appliquer audit résultat de ladite opération logique de OU Exclusif, une opération logique de OU avec le bit de poids i du masque,
- à positionner le bit de poids i-1 du masque à la valeur du résultat de ladite opération logique de OU.

Avantageusement, ledit procédé d'accès comprend en outre une étape de décalage des adresses par addition ou soustraction à la valeur de l'index IDX de la valeur d'un nombre préalablement tiré de manière aléatoire.

La présente invention concerne également un dispositif du type carte à puce comprenant une unité de traitement pouvant accéder à une mémoire, soit en écriture, soit en lecture qui est caractérisé en ce que ladite unité de contrôle est prévue pour pouvoir mettre en oeuvre un procédé d'accès selon l'invention tel qu'il vient d'être décrit.

La présente invention concerne également un programme implémenté sur un support mémoire, susceptible d'être mis en oeuvre au sein d'une unité de traitement et comprenant des instructions pour la mise en oeuvre d'un procédé d'accès tel qu'il vient d'être décrit.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :

Les Figs. 1a et 1b sont des schémas simplifiés illustrant respectivement le procédé d'accès à une zone mémoire respectivement à des fins de lecture et d'écriture,
La Fig. 2 est un diagramme illustrant les différentes étapes par un procédé de l'invention,
Les Figs. 3 et 4 sont des diagrammes illustrant les différentes étapes constituant l'étape de traitement du procédé d'accès de la Fig. 2.

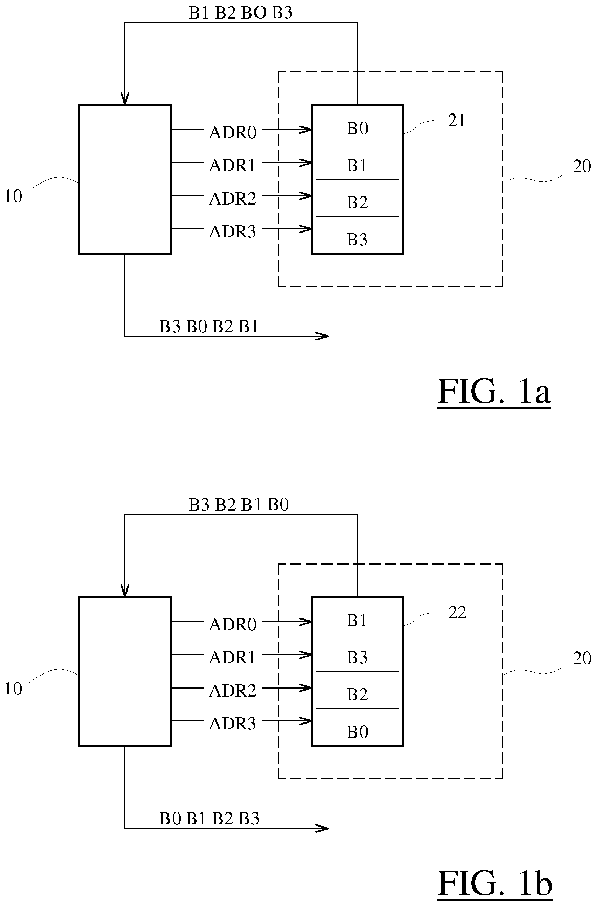

A la Fig. 1a, on a illustré une opération de lecture de tous les blocs de données B0 à BN (ici N=3) respectivement stockés dans une zone-mémoire 21 d'une mémoire 20 aux N+1 adresses consécutives ADR0 à ADRN. Cette opération de lecture consiste, pour chaque temps Ti avec i = 0 à N, d'une séquence de lecture de la zone mémoire 21, pour l'unité de contrôle 10, à déterminer une adresse ADRj avec j = 0 à N et à lire le bloc de données Bj stocké à cette adresse ADRj. Chaque adresse ADRj est déterminée selon un processus de détermination d'adresse qui est telle qu'une adresse ADRj déterminée pour un temps d'accès Ti ne puisse pas être de nouveau déterminée pour un autre temps d'accès Tk, avec $k \neq i$. De plus, selon l'invention, ledit processus de détermination d'adresse est un processus pseudo aléatoire, c'est-à-dire que pour chaque Ti, l'adresse ADRj est déterminée de manière aléatoire ou pseudo aléatoire.

Il en résulte que l'ordre de lecture des blocs de données B0 à BN lus par l'unité de traitement 10 ne correspond pas à l'ordre temporel T0 à TN. Dans le cas illustré à la Fig. 1a, cet ordre de lecture est B1, B2, B0 et B3.

A la Fig. 1b, on a illustré une opération d'écriture de blocs de données B0 à BN en des adresses ADR0 à ADRN d'une zone-mémoire 22 d'une mémoire 20. Cette opération d'écriture consiste, à chaque temps Ti avec i = 0 à N d'une séquence d'écriture de la zone mémoire 22, pour l'unité de contrôle 10, à générer une adresse ADRj et à écrire le bloc Bi à cette adresse ADRj. Comme précédemment, chaque adresse ADRj est déterminée selon un processus de détermination d'adresse qui est telle qu'une adresse ADRj déterminée pour un temps d'accès Ti ne puisse pas être de nouveau déterminée pour un autre temps d'accès Tk, avec $k \neq i$. De plus, selon l'invention, ledit processus de détermination d'adresse est un processus pseudo aléatoire, c'est-à-dire que pour chaque Ti, l'adresse ADRj est déterminée de manière aléatoire ou pseudo aléatoire.

A la Fig. 1b, l'ordre des blocs de données qui sont écrits par l'unité de traitement 10 est B0, B1, B2 et B3 alors que l'ordre des adresses où sont respectivement écrits ces blocs de données est B0 à B3 est ADR3, ADR0, ADR2 et ADR1.

A la Fig. 1a, les blocs de données lus peuvent être transmis dans leur ordre de lecture à une unité distante (non représentée). Ils peuvent également être stockés dans cet ordre ou dans un autre ordre dans une autre zone-mémoire de la mémoire 20 comme cela est représenté à la Fig. 1b.

De même, à la Fig. 1b, les blocs de données qui sont stockés dans la zone mémoire 22 peuvent avoir été reçus d'une unité distante (non représentée). L'ordre temporel de leur écriture dans la zone mémoire 22 correspond alors à leur ordre temporel de réception. Ils peuvent également avoir été lus dans cet ordre ou un autre dans une autre zone mémoire de la mémoire 20, selon un processus tel que celui qui est décrit en relation avec la Fig. 1a.

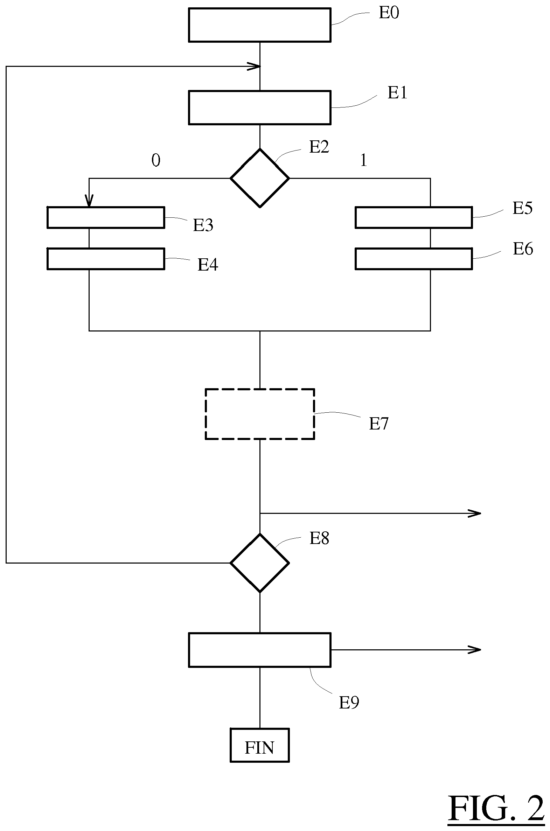

On a représenté à la Fig. 2 un diagramme illustrant les étapes qui sont mises en oeuvre lors d'une opération de lecture ou une opération d'écriture telles qu'elles viennent d'être décrites en relation avec les Figs. 1a et 1b pour déterminer les adresses consécutives ADRj, avec j = 0 à N, respectivement aux temps Ti, avec i = 0 à N. L'ensemble de ces étapes forme un procédé d'accès à l'ensemble des cellules d'une zone mémoire. Ce procédé est un processus itératif à N+1 itérations, N+1 étant la taille de la zone mémoire à adresser. Chaque itération est exécutée à un temps Ti, avec i = 0 à N.

Dans une première étape E1, un bit d'aléa Ai est déterminé qui peut prendre soit une première valeur, par exemple 0, soit une seconde valeur, par exemple 1. Selon un premier mode de réalisation, la valeur du bit d'aléa Ai est déterminée de manière aléatoire ou pseudo aléatoire.

A l'étape E2, si la valeur du bit d'aléa Ai est une première valeur, par exemple 0, alors, à l'étape E3, un index IDX prend la valeur d'un premier indice UP et, à la suite à l'étape E4, la valeur dudit premier indice UP est incrémentée de un.

L'opération d'incrémentation est, par exemple, réalisée modulo N+1. Par exemple, si N+1 = 8, l'incrémentation de l'indice UP qui aurait la valeur 7 donnera la valeur 7+1=0. De manière générale, l'incrémentation de l'indice UP qui aurait la valeur N donnera la valeur 0.

A l'étape E2, si la valeur de Ai est une seconde valeur, par exemple 1, alors, à l'étape E5, l'index IDX prend la valeur d'un second indice DOWN et, à la suite à l'étape E6, la valeur dudit second indice DOWN est décrémentée de un.

L'opération de décrémentation est aussi, par exemple, réalisée modulo N+1. Par exemple, si N+1 = 8, la décrémentation de l'indice DOWN qui aurait la valeur 0 donnera la valeur 0-1=7. De manière générale, la décrémentation de l'indice DOWN qui aurait la valeur 0 donnera la valeur N.

Les étapes E4 et E6 sont suivies d'une étape optionnelle E7 de traitement de l'index IDX qui sera décrite ultérieurement.

Si aucune étape E7 n'est mise en oeuvre, ce que l'on considère pour le moment, la valeur de l'index IDX au temps Ti, IDX(i) constitue la valeur ADRj de l'adresse qui servira à une opération de lecture ou d'écriture de la zone mémoire considérée. On peut ainsi écrire :

$$IDX(i) = ADRj$$

Les étapes E1 à E7 sont répétées à chacune des N+1 itérations du procédé d'accès. Lorsque le nombre d'itérations exécutées a donc été de N+1, le procédé de d'accès est interrompu. Par exemple, une étape de contrôle E8 vérifie si toutes les itérations ont été effectuées. Si ce n'est pas le cas, le procédé est de nouveau branché à l'étape E1 pour l'exécution de la prochaine itération (i = i+1). Sinon, il est arrêté.

L'étape de contrôle E8 peut par exemple effectuer le branchement vers l'étape E1 tant que l'indice DOWN est inférieur à l'indice UP et effectuer le branchement vers la fin du processus lors que l'indice DOWN devient égal ou supérieur à l'indice UP.

On pourra remarquer que, si les étapes d'incrémentation E3 et de décrémentation E5 sont réalisées modulo N+1, toutes les valeurs prises par l'index IDX sont comprises entre 0 et N. De plus, une valeur de IDX n'est jamais prise deux fois lors de l'exécution des étapes du processus itératif. Ainsi, toute la zone mémoire de taille N+1 a été adressée, non pas dans l'ordre des adresses ADR0 à ADRN mais dans un ordre pseudo-aléatoire dont l'aléa global est donné par chacune des valeurs des bits d'aléa Ai.

A une étape E9, peut être calculé cet aléa global, que l'on note AG, construit par concaténation des bits d'aléa Ai. Le nième bit de l'aléa AG correspond au bit Ai dont i = n. Cet aléa global AG, comme on le montrera dans la suite de la description, permettra de mener un procédé d'accès dual du procédé d'accès tel qu'il vient d'être décrit.

A l'étape E0 d'initialisation du procédé d'accès de l'invention, l'indice UP est initialisé à une valeur aléatoire comprise entre 0 et N, référencée ORG, et l'indice DOWN à cette valeur augmentée de la taille de la zone à adresser moins un, soit ORG + N.

Nous donnons ci-dessous un exemple de mise en oeuvre du procédé d'accès de l'invention dans ce premier mode de réalisation.

Supposons N = 7 et ORG = 5. Alors, à l'étape E0, UP = 5 et DOWN = 12 modulo 8, soit 4.

Au temps t = 0, supposons que l'étape E1 donne 0. Alors à l'étape E3, l'index IDX prend la valeur 5, et à l'étape E4, l'indice UP est incrémenté pour prendre la valeur 6. On suppose qu'aucune étape E7 n'est mise en oeuvre.

La première valeur d'adressage ADR est donc 5.

Le tableau ci-dessous donne les différentes valeurs respectivement prises par les bits d'aléa Ai, par l'indice UP, par l'indice DOWN et par l'index IDX pour des temps d'accès Ti d'indice i = 0 à N.

| i | 0 | 1 | 2 | 3 | 4 | 5 | 6 | 7 |
|------|---|---|---|---|---|---|---|---|
| Ai | 0 | 0 | 1 | 0 | 1 | 1 | 0 | 1 |
| UP | 5 | 6 | 6 | 7 | 7 | 7 | 0 | 0 |
| DOWN | 4 | 4 | 4 | 4 | 4 | 3 | 2 | 1 |
| IDX | 5 | 6 | 4 | 7 | 3 | 2 | 0 | 1 |

La valeur de l'aléa global AG calculé à l'étape E9 est dans ce cas = 10110100 en binaire, soit B4 en hexadécimal ou 180 en décimal.

On remarquera que les toutes valeurs comprises entre 0 et 7 sont prises par l'index IDX, et une seule fois.

Par exemple, il pourrait s'agir d'une opération d'écriture dans une zone mémoire de taille 8, de 8 blocs de données Bi, i = 0 à 7, chacun à un temps Ti. Alors cette zone mémoire aurait l'apparence donnée dans le tableau Adresse/Données suivant :

| Adresse | Données |
|---------|---------|
| 0 | B6 |
| 1 | B7 |
| 2 | B5 |

(suite)

| Adresse | Données |
|---------|---------|
| 3 | B4 |
| 4 | B2 |
| 5 | B0 |
| 6 | B1 |
| 7 | B3 |

Selon un second mode de réalisation de l'invention, ladite étape E1 de détermination de la valeur du bit d'aléa Ai pour le temps d'accès Ti consiste à extraire d'un registre, dit registre d'aléa, dont la valeur a été préalablement déterminée le bit dont le poids correspond au rang i du temps d'accès Ti. La taille de ce registre est égale à la taille de la zone mémoire à adresser.

Selon un mode particulier de ce mode de réalisation, le nombre stocké dans le registre d'aléa a été déterminé lors d'une précédente instance de mise en oeuvre du procédé d'accès selon l'invention, en particulier de son étape E9 comme cela vient d'être expliqué. Ce nombre est donc la valeur de l'aléa global AG.

Ainsi, on dispose, préalablement, d'une part, de l'aléa global AG et, d'autre part, de l'origine ORG, dont les valeurs sont celles qui ont été déterminées lors d'un procédé d'accès précédent.

Nous donnons ci-dessous un exemple de mise en oeuvre d'un second mode de réalisation d'un procédé d'accès selon l'invention.

Supposons N = 7. La valeur ORG est égale à 5 et celle de l'aléa global AG est égal à B4 en hexadécimal. Ces deux valeurs sont par exemple égales à celles déterminées lors du procédé d'accès précédent. A l'étape E0, comme précédemment, UP est déterminé égal à 5 et DOWN à 4.

Pour le temps d'accès T0, le bit d'aléa extrait A0 est le bit de poids faible de AG soit 0. Alors à l'étape E3, UP devient égal à 6 et, à l'étape E4, l'index IDX devient égal à 6. On suppose qu'aucune étape E7 n'est mise en oeuvre.

La première valeur d'adresse est donc 5.

Le tableau ci-dessous donne les différentes valeurs respectivement prises par les bits d'aléa Ai, par l'indice UP, par l'indice DOWN et par l'index IDX pour des temps d'accès Ti d'indice i = 0 à N. On remarquera qu'elles sont identiques à celles prises par l'exemple d'exécution du procédé d'accès de l'invention précédemment décrit.

| I | 0 | 1 | 2 | 3 | 4 | 5 | 6 | 7 |
|------|---|---|---|---|---|---|---|---|
| Ai | 0 | 0 | 1 | 0 | 1 | 1 | 0 | 1 |
| UP | 5 | 6 | 6 | 7 | 7 | 7 | 0 | 0 |
| DOWN | 4 | 4 | 4 | 4 | 4 | 3 | 2 | 1 |
| IDX | 5 | 6 | 4 | 7 | 3 | 2 | 0 | 1 |

Par exemple, il pourrait s'agir d'une opération de lecture effectuée par adressage d'une zone mémoire, telle que celle qui est donnée dans le tableau Adresse-Données ci-dessus et qui résulte d'un procédé d'accès à des fins d'une opération de lecture effectuée précédemment. On pourra aisément vérifier que les blocs de données lus seront maintenant, dans l'ordre temporel :

B0, B1, B2, B3, B4, B5, B6 et B7.

Dans un autre mode de réalisation, une étape de traitement E7 est mise en oeuvre, laquelle consiste à appliquer à l'index IDX une opération de OU Exclusif bit à bit avec un nombre aléatoire, noté RND, tiré au hasard avant le lancement du procédé de détermination d'adresses de la zone mémoire :

$$IDX = IDX \ XOR \ RND.$$

On rappelle que la table de vérité de la fonction logique XOR (OU Exclusif) est

| | 0 | 1 |
|---|---|---|
| 0 | 0 | 1 |
| 1 | 1 | 0 |

Supposons, à titre d'exemple, que RND soit égal 5 et que pour IDX on ait obtenu les valeurs du tableau précédent.

| IDX | 5 | 6 | 4 | 7 | 3 | 2 | 0 | 1 |
|---|---|---|---|---|---|---|---|---|
| IDX XOR RND | 0 | 3 | 1 | 2 | 6 | 7 | 5 | 4 |

Prenons un autre exemple. La zone mémoire à adresser est dans cet exemple de taille 6. On a donc N+1 = 6.

Supposons que l'on ait obtenu les valeurs d'index IDX données dans le tableau suivant. RND est toujours égal à 5.

| IDX | 1 | 0 | 2 | 5 | 4 | 3 |
|---|---|---|---|---|---|---|
| IDX XOR RND | 4 | 5 | 7 | 0 | 1 | 6 |

On remarque que, dans ce cas, les adresses 7 et 6 sont supérieures aux adresses de la zone mémoire considérée.

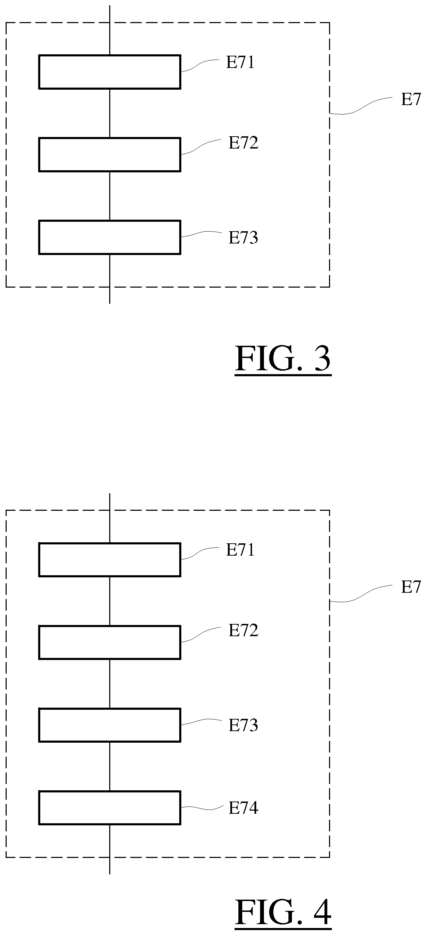

Pour résoudre ce problème de débordement d'adresses, conformément à la Fig. 3, l'étape E7 inclut les étapes E71, E72 et E73.

L'étape E71 est une étape de calcul d'une valeur de masque MSK. Si on appelle S la taille en bits des variables, MSK.bit[0] le bit de poids faible de MSK, MSK.bit[i] le ième bit de MSK et MSK.bit[S-1] le bit de poids fort de MSK. Selon l'invention, le masque MSK est obtenu comme suit :

Pour i prenant successivement les valeurs de S-1 à 1,

$$MSK.bit[i-1] = MSK.bit[i] \; OU \; (MAX.bit[i] \; XOR \; IDX.bit[i])$$

et

$$MSK.bit[S-1] = 0.$$

On rappelle que la fonction logique OU a pour table de vérité :

| | 0 | 1 |
|---|---|---|
| 0 | 0 | 1 |
| 1 | 1 | 1 |

Pour les valeurs de IDX données dans le tableau précédent, les valeurs du masque MSK sont les suivantes :

| IDX | 1 | 0 | 2 | 5 | 4 | 3 |
|---|---|---|---|---|---|---|
| MSK | 3 | 3 | 3 | 1 | 1 | 3 |

A l'étape E72, à la valeur du nombre aléatoire RND est appliqué le masque MSK par une opération de ET bit à bit, pour donner un nouveau nombre aléatoire RNDI.

$$RNDI = RND \ ET \ MASK$$

On rappelle que la table de vérité de la fonction logique ET est la suivante :

|   | 0 | 1 |
|---|---|---|
| 0 | 0 | 0 |
| 1 | 0 | 1 |

A l'étape E73, à la valeur de l'index IDX est appliqué, par un OU Exclusif bit à bit, le nombre aléatoire RNDI ainsi calculé :

$$IDX = IDX \ XOR \ RNDI$$

Dans le tableau ci-dessous, sont données les valeurs prises par ces différentes variables.

| IDX | 1 | 0 | 2 | 5 | 4 | 3 |
|---|---|---|---|---|---|---|
| MSK | 3 | 3 | 3 | 1 | 1 | 3 |
| RNDI = MSK ET RND | 1 | 1 | 1 | 1 | 1 | 1 |
| IDX = IDX XOR RNDI | 0 | 1 | 3 | 4 | 5 | 2 |

On remarquera que toutes les valeurs de l'index IDX ainsi calculées sont maintenant comprises entre 0 et 5 et donc qu'elles adressent la zone mémoire initiale sans débordement de celle-ci.

Par l'utilisation des étapes E71, E72 et E73, des zones mémoire de toute taille peuvent être manipulées selon l'invention.

Dans un troisième mode de réalisation illustré à la Fig. 4, l'étape de traitement E7 inclut une étape E74 de décalage des adresses par addition ou soustraction à la valeur de l'index IDX issu de l'étape E73 de la valeur d'un décalage DEC. Les valeurs d'initialisation des indices UP et DOWN peuvent alors être respectivement 0 et N.

**Revendications**

1. Procédé d'accès à l'ensemble des cellules d'une zone mémoire à des fins d'écriture ou de lecture de blocs de données dans lesdites cellules, ledit procédé comprenant, pour chacun des temps d'accès (Ti avec i = 0 à N) auxdites cellules de ladite zone mémoire à accéder, un processus de détermination de l'adresse (ADRj, avec j = 0 à N), de la cellule de la zone mémoire à accéder audit temps d'accès (Ti) par un processus pseudo aléatroire, une adresse (ADRj) déterminée pour un temps d'accès (Ti) n'étant pas de nouveau déterminée pour un autre temps d'accès (Tk, k ≠ j), ledit processus de détermination de chaque adresse (ADRj) est un processus pseudo aléatoire, **caractérisé en ce que** ledit processus de détermination pseudo aléatoire comprend, mises en oeuvre pour chaque temps d'accès (Ti, i = 0 à N) :

   - une étape (E1) de détermination aléatoire d'un bit d'aléa (Ai) qui peut ainsi prendre soit une première valeur, soit une seconde valeur,
   - une étape (E2) de test de la valeur prise par ledit bit d'aléa (Ai) qui branche ledit processus,
   - soit vers une étape (E3) de détermination d'un index (IDX) comme étant égal à la valeur d'un premier indice (UP), suivie d'une étape (E4) d'incrémentation d'une unité dudit premier indice (UP),
   - soit vers une étape (E5) de détermination dudit index (IDX) comme étant égal à la valeur d'un second indice (DOWN), suivie d'une étape (E6) de décrémentation d'une unité dudit second indice (DOWN),

   la valeur dudit index (IDX) étant la valeur de ladite adresse de la cellule de la zone mémoire à accéder audit temps d'accès (Ti).

2. Procédé d'accès selon la revendication 1, **caractérisé en ce que** ladite étape de détermination aléatoire (E1) consiste à choisir aléatoirement la valeur dudit bit d'aléa.

3. Procédé d'accès selon la revendication 1, **caractérisé en ce que** ladite étape de détermination aléatoire (E1) consiste à extraire d'un registre le bit de poids correspondant au rang du temps d'accès considéré, ledit registre stockant un nombre préalablement déterminé de manière pseudo aléatoire.

4. Procédé d'accès selon la revendication 3, **caractérisé en ce que** le nombre stocké dans ledit registre a été déterminé lors d'une précédente instance de mise en oeuvre du procédé d'accès selon la revendication 2 par concaténation de tous les bits d'aléa (Ai) de manière que le bit d'aléa déterminé lors de la précédente instance pour un temps d'accès de rang (i) soit stocké dans le bit dudit registre dont le poids est égal audit rang (i).

5. Procédé d'accès selon une des revendications 1 à 4, **caractérisé en ce que** ladite zone mémoire étant de taille N+1, la valeur initiale du premier indice (UP) est comprise entre 0 et N et la valeur initiale du second indice (DOWN) est égale à la valeur initiale du premier indice à laquelle est ajoutée la taille de ladite zone mémoire moins un.

6. Procédé d'accès selon la revendication 5, **caractérisé en ce que** la valeur initiale du premier indice est déterminée de manière aléatoire ou pseudo aléaloire.

7. Procédé d'accès selon une des revendications 1 à 6, **caractérisé en ce qu'**il consiste lors d'une étape (E0) d'initialisation, à déterminer la valeur d'un nombre aléatoire (RND), et **en ce que** ledit processus de détermination comprend en outre, après détermination de la valeur de l'index (IDX) pour le temps d'accès (Ti), une étape d'application à l'index ainsi déterminé d'une opération logique de OU Exclusif bit à bit avec ledit nombre aléatoire (RND), la valeur résultant de ladite opération étant la valeur de l'adresse d'accès à la cellule de la zone mémoire à accéder audit temps d'accès (Ti).

8. Procédé d'accès selon une des revendications 1 ou 6, **caractérisé en ce qu'**il consiste, lors d'une étape d'initialisation (E0), à déterminer la valeur d'un nombre aléatoire (RND), et **en ce que** ledit processus de détermination d'adresse comprend en outre, après détermination de la valeur de l'index (IDX) pour le temps d'accès (Ti), une étape (E71) de calcul d'une valeur de masque (MSK), une étape (E72) d'application à ladite valeur dudit nombre aléatoire d'une opération logique ET bit à bit avec ledit masque (MSK), et une étape (E73) d'application à l'index déterminé pour le temps d'accès (Ti) considéré d'une opération logique de OU Exclusif bit à bit avec le résultat de ladite opération logique ET, la valeur résultant de l'opération de OU Exclusif étant la valeur de l'adresse d'accès à la cellule de la zone mémoire à accéder audit temps d'accès (Ti).

9. Procédé d'accès selon la revendication 8, **caractérisé en ce que** ladite étape (E71) de calcul d'une valeur de masque consiste à :

- positionner le bit de poids fort dudit masque à zéro, puis pour chaque bit de poids i prenant successivement les valeurs de S-1 à 1, S étant la taille en nombre de bits des variables utilisées pour les opérations logiques,
- à appliquer au bit de poids i de l'index déterminé une opération logique de OU Exclusif avec le bit de poids i de la taille de ladite zone mémoire,
- à appliquer audit résultat de ladite opération logique de OU Exclusif, une opération logique de OU avec le bit de poids i du masque,
- à positionner le bit de poids i-1 du masque à la valeur du résultat de ladite opération logique de OU.

10. Procédé d'accès selon une des revendications 5 à 9, **caractérisé en ce qu'**il comprend en outre une étape (E74) de décalage des adresses par addition ou soustraction à la valeur de l'index (IDX) de la valeur d'un nombre préalablement tiré de manière aléatoire.

11. Dispositif du type carte à puce comprenant une unité de traitement (10) pouvant accéder à une mémoire (20), soit en écriture, soit en lecture, **caractérisé en ce que** ladite unité de contrôle (10) est prévue pour pouvoir mettre en oeuvre un procédé d'accès selon une des revendications 1 à 10.

12. Programme implémenté sur un support mémoire, susceptible d'être mis en oeuvre au sein d'une unité de traitement (10) et comprenant des instructions pour la mise en oeuvre d'un procédé selon l'une des revendications 1 à 10.

**Patentansprüche**

1. Zugriffsverfahren für den Zugriff auf alle Zellen eines Speicherbereichs zum Schreiben oder Lesen von Datenblöcken in den genannten Zellen, wobei das genannte Verfahren für jede Zeit (Ti mit i = 0 bis N) des Zugriffs auf die genannten Zellen des genannten Speicherbereichs, auf die zugegriffen werden soll, einen Prozess zur Bestimmung der Adresse (ADRj, mit j = 0 bis N) der Zelle des Speicherbereichs, auf die in der genannten Zugriffszeit (Ti) durch einen Pseudo-Zufallsprozess zugegriffen werden soll, umfasst, wobei eine, für eine Zugriffszeit (Ti) bestimmte Adresse (ADRj) nicht erneut für eine andere Zugriffszeit (Tk, k ≠ j) bestimmt wird, der genannte Prozess zur Bestimmung jeder Adresse (ADRj) ein Pseudo-Zufallsprozess ist, **dadurch gekennzeichnet, dass** der pseudo-zufällige Bestimmungsprozess folgende, für jede Zugriffszeit (Ti, i = 0 bis N) umzusetzende Schritte umfasst:

   - einen Schritt (E1) der zufälligen Bestimmung eines Zufallsbits (Ai), das somit einen ersten oder einen zweiten Wert annehmen kann,
   - einen Schritt (E2) der Prüfung des, von dem genannten Zufallsbit (Ai) angenommenen Werts, der den genannten Prozess
   - entweder zu einem Schritt (E3) weiterleitet, der in der Bestimmung eines, als mit einem ersten Index (UP) gleichwertig vorausgesetzten Index (IDX) besteht, gefolgt von einem Schritt (E4) der Erhöhung des genannten Index (UP) um eine Einheit,
   - oder zu einem Schritt (E5), der in der Bestimmung des genannten, als mit einem zweiten Index (DOWN) gleichwertig vorausgesetzten Index (IDX) besteht, gefolgt von einem Schritt (E6) der Senkung des genannten zweiten Index (DOWN) um eine Einheit,

   wobei der Wert des genannten Index (IDX) der Wert der genannten Adresse der Zelle des Speicherbereichs ist, auf die in der genannten Zugriffszeit (Ti) zugegriffen werden soll.

2. Zugriffsverfahren nach Patentanspruch 1, **dadurch gekennzeichnet, dass** der genannte Schritt der zufälligen Bestimmung (E1) darin besteht, den Wert des genannten Zufallsbits zufällig zu wählen.

3. Zugriffsverfahren nach Patentanspruch 1, **dadurch gekennzeichnet, dass** der genannte Schritt der zufälligen Bestimmung (E1) darin besteht, aus einem Register das Bit zu extrahieren, dessen Gewichtung dem Rang der betreffenden Zugriffszeit entspricht, wobei das Register eine im voraus pseudo-zufällig bestimmte Zahl speichert.

4. Zugriffsverfahren nach Patentanspruch 3, **dadurch gekennzeichnet, dass** die im Register gespeicherte Zahl anlässlich einer vorhergegangenen Umsetzungsinstanz des Zugriffsverfahrens nach Patentanspruch 2 dadurch bestimmt wurde, dass alle Zufallsbits (Ai) derart verkettet wurden, dass das, in der vorgegangenen Instanz für eine Zugriffszeit des Rangs (i) bestimmte Zufallsbit in dem Bit des genannten Registers gespeichert wird, dessen Gewichtung dem genannten Rang (i) entspricht.

5. Zugriffsverfahren nach einem der Patentansprüche 1 bis 4, **dadurch gekennzeichnet, dass** aufgrund dessen, dass die Größe des genannten Speicherbereichs N+1 ist, der ursprüngliche Wert des ersten Index (UP) zwischen O und N liegt und der ursprüngliche Wert des zweiten Index (DOWN) gleich dem ursprünglichen Wert des ersten Index ist, zu dem die Größe des genannten Speicherbereichs minus eins addiert wird.

6. Zugriffsverfahren nach Patentanspruch 5, **dadurch gekennzeichnet dass** der ursprüngliche Wert des ersten Index zufällig oder pseudo-zufällig bestimmt wird.

7. Zugriffsverfahren nach einem der Patentansprüche 1 bis 6, **dadurch gekennzeichnet, dass** das Verfahren darin besteht, den Wert einer Zufallszahl (RND) in einem Initialisierungsschritt (E0) zu bestimmen, sowie dadurch, dass der genannte Bestimmungsprozess im Anschluss an die Wertbestimmung des Index (IDX) für die Zugriffszeit (Ti) zudem einen Schritt der Anwendung auf den so bestimmten Index einer logischen bitweisen Exklusiv-ODER-Operation mit der genannten Zufallszahl (RND) umfasst, wobei der, aus der genannten Operation resultierende Wert der Wert Zugriffsadresse auf die Zelle des Speicherbereichs ist, auf die in der genannten Zugriffszeit (Ti) zugegriffen werden soll.

8. Zugriffsverfahren nach einem der Patentansprüche 1 oder 6, **dadurch gekennzeichnet, dass** das Verfahren darin besteht, den Wert einer Zufallszahl (RND) in einem Initialisierungsschritt (E0) zu bestimmen, sowie dadurch, dass der genannte Prozess zur Bestimmung der Adresse im Anschluss an die Wertbestimmung des Index (IDX) für die Zugriffszeit (Ti) zudem einen Schritt (E7) der Berechnung eines Maskenwerts (MSK), einen Schritt (E72) der Anwendung einer logischen bitweisen UND-Operation mit der genannten Maske (MSK) auf den genannten Wert der genannten Zufallszahl und einen Schritt (E73) der Anwendung auf den, für die betreffende Zugriffszeit (Ti) bestimmten Index einer logischen bitweisen Exklusiv-ODER-Operation mit dem Resultat der genannten logischen UND-Operation, wobei der aus der Exklusiv-ODER-Operation resultierende Wert der Wert der Zugriffsadresse auf die Zelle des Speicherbereichs ist, auf die in der genannten Zugriffszeit (Ti) zugegriffen werden soll.

9. Zugriffsverfahren nach Patentanspruch 8, **dadurch gekennzeichnet, dass** der genannte Schritt (E71) der Berechnung eines Maskenwerts darin besteht:

   - das höchstgewichtige Bit der genannten Maske auf Null zu positionieren, dann für jedes i-gewichtete Bit, das nacheinander die Werte S-1 bis 1 animmt, wobei S die Größe der, den logischen Operationen zugrunde gelegten Variablen gemessen in der Anzahl an Bits ist,
   - auf das i-gewichtete Bit des bestimmten Index eine logische Exklusiv-ODER-Operation mit dem i-gewichteten Bit der Größe des genannten Speicherbereichs anzuwenden,
   - auf das Ergebnis der genannten logischen Exklusiv-ODER-Operation eine logische ODER-Operation mit dem i-gewichteten Bit der Maske anzuwenden,
   - das i-gewichtete Bit der Maske auf dem Wert des Resultats der genannten logischen ODER-Operation zu positionieren.

10. Zugriffsverfahren nach einem der Patentansprüche 5 bis 9, **dadurch gekennzeichnet**, das das Verfahren zudem einen Schritt (E74) umfasst, der darin besteht, die Adressen dadurch zu verschieben, dass der Wert einer im voraus zufällig gezogenen Zahl zum Wert des Index (IDX) addiert oder von ihm subtrahiert wird.

11. Vorrichtung in der Art einer Chipkarte umfassend eine Verarbeitungseinheit (10), die zum Schreiben und Lesen auf einen Speicher (20) zugreifen kann, **dadurch gekennzeichnet, dass** die genannte Steuereinheit (10) vorgesehen ist, um ein Zugriffsverfahren nach einem der Patentansprüche 1 bis 10 umzusetzen.

12. Auf einem Speichermedium implementiertes Programm, das in einer Verarbeitungseinheit (10) umgesetzt werden kann und Anweisungen zur Umsetzung des Verfahrens nach einem der Patentansprüche 1 bis 10 umfasst.

### Claims

1. Method for access to all the cells in a memory area for purposes of writing or reading data blocks in said cells, said method comprising, for each access time (Ti with i = 0 to N) to said cells in said memory area to be accessed, a process of determining the address (ADRj, with j = 0 to N) of the cell of the memory area to be accessed at said access time (Ti), an address (ADRj) determined for an access time Ti not being once again determined for another access time (Tk, k ≠ j), **characterised in that** said process of determining each address (ADRj) is a pseudorandom process, **characterised in that** said pseudorandom address determination method comprises, implemented for each access time (Ti, i = 0 to N):

   - a step (E1) of random determination of a random bit (Ai), which can thus take either a first value or a second value,
   - a step (E2) of testing the value taken by said random bit (Ai) that switches said process
   - either to a step (E3) of determining an index (IDX) as being equal to the value of a first index (UP), followed by a step (E4) of incrementing a unit of said first index (UP),
   - or to a step (E5) of determining said index (IDX) as being equal to the value of a second index (DOWN), followed by a step (E6) of decrementing a unit of said second index (DOWN),

   the value of said index (IDX) being the value of said address of the cell of the memory area to be accessed at said access time (Ti).

2. Access method according to claim 1, **characterised in that** said random determination step (E1) consists of randomly choosing the value of said random bit.

3. Access method according to claim 1, **characterised in that** said random determination step (E1) consists of extracting from a register the bit corresponding to the rank of the access time in question, said register storing a number previously determined pseudorandomly.

4. Access method according to claim 3, **characterised in that** the number stored in said register was determined during a previous instance of implementation of the access method according to claim 3 by concatenation of all the random bits (Ai) so that the random bit determined during the first instance for an access time of rank (i) is stored in the bit of said register the weight of which is equal to said rank (i).

5. Access method according to one of claims 1 to 4, **characterised in that**, said memory area being of size N+1, the initial value of the first index (UP) is between 0 and N and the initial value of the second index (DOWN) is equal to the initial value of the first index to which the size of said memory area minus one is added.

6. Access method according claim 5, **characterised in that** the initial value of the first index is determined randomly or pseudorandomly.

7. Access method according to one of claims 1 to 6, **characterised in that** it consists, during an initialisation step (E0), of determining the value of a random number (RND), and **in that** said determination process further comprises, after determination of the value of the index (IDX) for the access time (Ti), a step of applying to the index thus determined a bitwise exclusive OR logic operation with said random number (RND), the value resulting from said operation being the value of the address for access to the cell of the memory area to be accessed at said access time (Ti).

8. Access method according to one of claims 1 or 6, **characterised in that** it consists, during an initialisation step (E0), of determining the value of a random number (RND), and **in that** said address determination process further comprises, after determination of the value of the index (IDX) for the access time (Ti), a step (E71) of calculating a mask value (MSK), a step (E72) of applying to said value of the random number a bitwise logic AND operation with said mask (MSK), and a step (E73) of applying to the index determined for the access time (Ti) in question a bitwise exclusive OR logic operation with the result of said logic AND operation, the value resulting from the exclusive OR operation being the value of the address for access to the cell of the memory area to be accessed at said access time (Ti).

9. Access method according to claim 8, **characterised in that** said step (E71) of calculating a mask value consists of:

    - positioning the most significant bit of said mask at zero and then, for each bit of weight i successively taking the values from S-1 to 1, S being the size in number of bits of the variables used for the logic operations,
    - applying, to the bit of weight i of the determined index, an exclusive OR logic operation with the bit of weight i of the size of said memory area,
    - applying to said result of said exclusive OR logic operation, a logic OR operation with the bit of weight i of the mask,
    - positioning the bit of weight i-1 of the mask at the value of the result of said logic OR operation.

10. Access method according to one of claims 6 to 10, **characterised in that** it further comprises a step (E74) of shifting the addresses by adding or subtracting, to or from the value of the index (IDX), the value of a number previously drawn randomly.

11. Device of the chip card type comprising a processing unit (10) able to access a memory (20), either in writing or reading, which is **characterised in that** said control unit (10) is designed to be able to implement an access method according to one of claims 1 to 11.

12. Program implemented on a memory medium, able to be used within a processing unit (10) and comprising instructions for implementing an access method according to one of claims 1 to 11.

FIG. 1a

FIG. 1b

FIG. 2

E71

E72

E73

E7

## FIG. 3

E71

E72

E73

E74

E7

## FIG. 4

**RÉFÉRENCES CITÉES DANS LA DESCRIPTION**

**Documents brevets cités dans la description**

- US 20090125686 A